# DEMANDE DE BREVET EUROPEEN

(11) **EP 0 834 737 A1**
(43) Date de publication de la demande: **08.04.1998**
(21) Numéro de dépôt: 97402284.0
(22) Date de dépôt: 01.10.1997
(51) Int. Cl.: G01N 25/52

(54) **Appareil pour la détermination du point d'éclair d'un produit**

(30) Priorité: 03.10.1996 FR 9612081
(71) Demandeur: ELF ANTAR FRANCE, 92400 Courbevoie (FR)
(72) Inventeur: Arthaud, Didier, 69760 Limonest (FR); Piquemal, Alain, 69440 Saint Didier sous Riverie (FR); Tort, Frédéric, 69230 St Genis Laval (FR)
(74) Mandataire: Timoney, Ian Charles Craig

(57) **Abrégé**

L'invention concerne un appareil pour la détermination du point d'éclair d'un produit (2), comprenant un vase (1) d'essai destiné à contenir le produit (2), des moyens (3) de chauffage du produit (2), des moyens (4 et 22) de production d'une flamme (5) calibrée, un élément (6) de mesure de la température du produit (2), caractérisé en ce qu'il comporte de plus, des moyens (7) optiques de détection de variations d'intensité lumineuse.

L'appareil de l'invention trouve son application dans les industries qui fabriquent ou utilisent des produits inflammables.

## Description

### DOMAINE TECHNIQUE

La présente invention concerne un appareil pour la détermination du point d'éclair d'un produit liquide ou solide.

Elle trouve son application dans les laboratoires de recherche, de contrôle, les services de sécurité des industries dans lesquelles sont fabriqués et/ou utilisés des produits inflammables.

### ETAT DE LA TECHNIQUE ANTERIEURE

Le point d'éclair d'un liquide est la température minimale à laquelle il faut le porter pour que les vapeurs émises s'allument spontanément en présence d'une flamme, dans des conditions normalisées.

Une méthode de détermination du point d'éclair en vase clos d'un produit liquide est décrite dans la norme NF T 60-103, décembre 1968.

Selon cette première méthode, le produit est introduit dans un vase constitué par un creuset fermé à sa partie supérieure par un couvercle muni d'une petite ouverture prolongée à l'extérieur du creuset par une petite cheminée. Le produit est chauffé progressivement et sans interruption, à l'allure de 2 à 3 degrés Celcius par minute. Une petite flamme de longueur environ 4 mm est maintenue juste au dessus de la cheminée du couvercle. Le point d'éclair est la température du produit à laquelle se produit un éclair à la sortie de la cheminée du couvercle. L'appareillage pour la mise en oeuvre de cette méthode est décrit en détail dans la norme NF T 60-103, il comprend essentiellement deux creusets et leur couvercle, un dispositif d'allumage, un dispositif de chauffage, un thermomètre et un support de creuset.

Une méthode de détermination du point d'éclair en vase ouvert d'un produit liquide est décrite dans la norme ISO 2592 : 1973. La norme européenne correspondante porte la référence EN 22592 : 1993.

Selon cette deuxième méthode, le produit est introduit dans un vase jusqu'à un niveau spécifié. Le produit est d'abord chauffé rapidement puis à une allure régulière et lente lorsqu'on se rapproche de la température du point d'éclair. A intervalles spécifiés de température, une petite flamme d'essai est passée au dessus de la surface du produit. La température la plus basse à laquelle l'application de la flamme provoque l'inflammation des vapeurs émises à la surface du produit est considérée comme le point d'éclair. L'appareillage pour la mise en oeuvre de cette méthode constitue l'appareil de Cleveland à vase ouvert dont la description est donnée en annexe de la norme ISO 2592 , il est composé d'un vase d'essai, d'une plaque chauffante, d'un dispositif permettant de présenter la flamme d'essai, d'un dispositif de chauffage et de supports.

L'utilisation des appareils pour la mise en oeuvre de ces méthodes est manuelle et la détection de l'inflammation des vapeurs produites est visuelle.

Ces appareils ont été perfectionnés par l'adjonction, d'un détecteur d'inflammation des vapeurs du type à ionisation, d'un capteur de température du produit et d'une électronique de traitement des signaux émis par le détecteur d'inflammation et le capteur de température. Un tel détecteur connu est constitué de deux électrodes métalliques, placées au dessus de la surface du produit dans la zone d'inflammation des vapeurs émises par le produit chauffé.

Au moment de l'apparition du phénomène d'inflammation l'espace inter-électrodes devient conducteur, l'électronique de traitement détecte cette conduction et enregistre la valeur de la température du produit.

Ces appareils présentent l'inconvénient d'être perturbés par la mousse qui se forme à la surface du produit, notamment lorsque ce dernier contient de l'eau et lorsqu'il est chauffé à haute température.

De plus, les électrodes étant placées dans la zone d'inflammation des vapeurs, elles se salissent rapidement par dépôt des produits de combustion de ces vapeurs et par ces vapeurs elles mêmes, ce qui nécessite des nettoyages fréquents.

### EXPOSE DE L'INVENTION

La présente invention a justement pour objet de remédier à ces inconvénients et notamment de fournir un appareil pour la détermination du point d'éclair d'un produit insensible à la mousse qui se forme à la surface du produit, peu sensible à l'encrassement et facile à nettoyer.

Il trouve son application dans les laboratoires de contrôle et de recherche des industries pétrolières et plus généralement dans les industries qui fabriquent ou utilisent des produits inflammables.

A cette fin l'invention propose un appareil pour la détermination du point d'éclair d'un produit, comprenant un vase d'essai destiné à contenir le produit, des moyens de chauffage du produit, des moyens de production d'une flamme calibrée, un élément de mesure de la température du produit, caractérisé en ce qu'il comporte de plus, des moyens optiques de détection de variations d'intensité lumineuse.

Selon une autre caractéristique de l'invention, le vase d'essai étant de type clos muni d'un couvercle comportant une ouverture pour la présentation de la flamme, les moyens optiques de détection de variations d'intensité lumineuse comportent au moins une fibre optique ayant une première extrémité et une seconde extrémité la première extrémité étant placée à l'extérieur du vase d'essai de manière à capter une partie du rayonnement lumineux émis par la flamme, ladite partie du rayonnement lumineux se propageant à l'intérieur de la fibre optique jusqu'à la seconde extrémité. Selon une autre caractéristique, l'appareil de l'invention comporte :
- un convertisseur de lumière en signal électrique ayant une entrée optique à laquelle est raccordée la seconde extrémité de la fibre optique et une sortie analogique électrique,
- un module de détection de disparition de la flamme, muni d'une entrée analogique reliée à la sortie analogique du convertisseur de lumière et d'une sortie logique qui délivre un signal électrique indicatif de la disparition de la flamme,
- un dispositif électronique raccordé à la sortie logique du module de détection de disparition de la flamme et à l'élément de mesure de la température, ledit dispositif enregistrant la valeur de la température du produit à l'instant d'apparition du signal électrique indicatif de la disparition de la flamme.

Selon une autre caractéristique de l'invention, le vase d'essai, les moyens de production d'une flamme calibrée et la première extrémité de la fibre optique sont placés à l'intérieur d'une enceinte opaque qui les protège de la lumière ambiante.

Selon une autre caractéristique, l'appareil de l'invention, comporte un indicateur de la taille de la flamme muni d'une entrée raccordée à la sortie analogique électrique du convertisseur de lumière.

Selon une autre caractéristique de l'invention, le vase d'essai étant de type ouvert et le produit émettant des vapeurs, les moyens optiques de détection de variations d'intensité lumineuse comportent une lentille convergente placée au dessus de la surface du produit, au moins une fibre optique ayant une première extrémité et une seconde extrémité, la première extrémité étant placée au foyer optique de la lentille convergente de manière à capter une partie du rayonnement lumineux émis par les vapeurs du produit enflammées par la flamme, ladite partie du rayonnement lumineux se propageant à l'intérieur de la fibre optique jusqu'à la seconde extrémité.

Selon une autre caractéristique de l'invention, le vase d'essai étant de type clos muni d'un couvercle comportant une première ouverture pour la présentation de la flamme et le produit émettant des vapeurs, les moyens optiques de détection de variations d'intensité lumineuse comportent au moins une fibre optique ayant une première extrémité et une seconde extrémité, la première extrémité pénétrant au travers d'une deuxième ouverture aménagée dans le couvercle est placée à l'intérieur du vase d'essai de manière à capter une partie du rayonnement lumineux émis par les vapeurs du produit enflammées par la flamme, ladite partie du rayonnement lumineux se propageant à l'intérieur de la fibre optique jusqu'à la seconde extrémité.

Selon une autre caractéristique, l'appareil de l'invention, comporte :
- un convertisseur de lumière en signal électrique ayant une entrée optique à laquelle est raccordée la seconde extrémité de la fibre optique et une sortie analogique électrique,
- un module de détection d'éclair lumineux, muni d'une entrée analogique reliée à la sortie analogique du convertisseur de lumière et d'une sortie logique qui délivre un signal électrique indicatif de l'allumage des vapeurs de produit,
- un dispositif électronique raccordé à la sortie logique du module de détection d'éclair lumineux et à l'élément de mesure de la température, ledit dispositif enregistrant la valeur de la température du produit à l'instant d'allumage des vapeurs du produit par la flamme.

### BREVE DESCRIPTION DES DESSINS

L'invention sera mieux comprise à la lecture de la description détaillée de différents modes de réalisation en référence aux dessins annexés dans lesquels :
- la figure 1 représente schématiquement un appareil pour la détermination du point d'éclair d'un produit selon un premier mode de réalisation
- la figure 2 représente schématiquement un deuxième mode de réalisation de l'invention selon lequel l'appareil pour la détermination du point d'éclair en vase clos comporte une fibre optique et des moyens de détection d'extinction de flamme.
- la figure 3 est un chronogramme des signaux essentiels intervenants dans l'appareil de l'invention pour la mesure du pcint d'éclair en vase clos.
- la figure 4 représente schématiquement un troisième mode de réalisation de l'invention pour la détermination du point d'éclair en vase ouvert selon lequel l'appareil comporte une lentille et une fibre optique.
- la figure 5 est un chronogramme des signaux essentiels intervenants dans l'appareil de l'invention pour la mesure du point d'éclair en vase ouvert.
- la figure 6 représente schématiquement un quatrième mode de réalisation de l'invention pour la détermination du point d'éclair en vase clos selon lequel l'appareil de l'invention comporte une fibre et des moyens de détection d'apparition d'un éclair lumineux.
- la figure 7 représente schématiquement un cinquième mode de réalisation de l'invention pour la détermination du point d'éclair en vase ouvert selon lequel l'appareil comporte trois fibres optiques.

### DESCRIPTION DETAILLEE DE L'INVENTION

D'une manière générale l'appareil de l'invention est utilisé pour déterminer le point d'éclair d'un produit inflammable, qui se définit comme la température la plus basse à laquelle l'application d'une flamme provoque l'inflammation des vapeurs émises à la surface du produit chauffé à une allure régulière et lente.

La flamme est positionnée de manière connue au dessus de la surface du produit, conformément aux normes de mesure du point d'éclair, lesquelles sont choisies en fonction de la nature du produit.

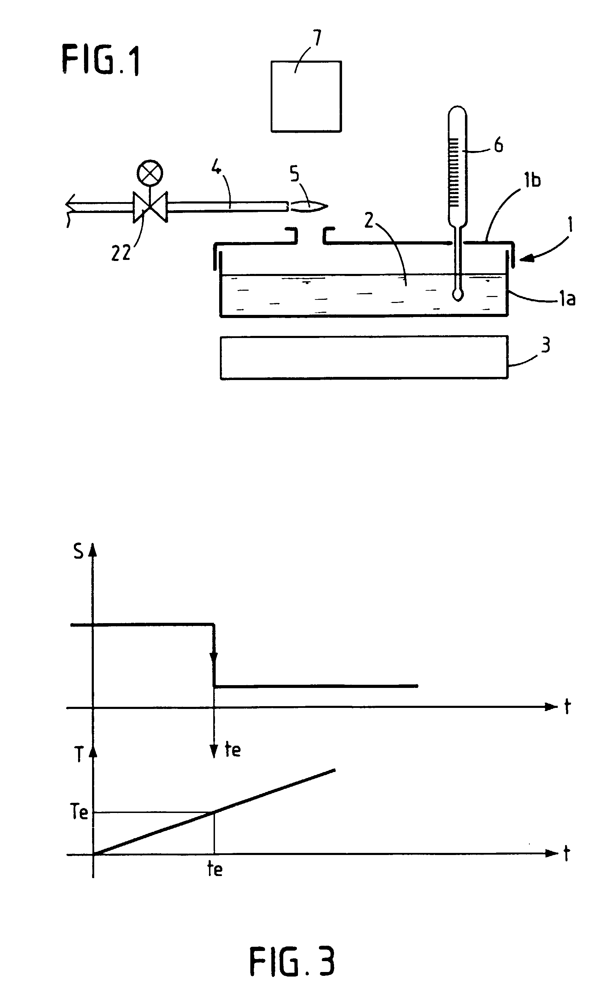

La figure 1 représente schématiquement un premier mode de réalisation de l'appareil de l'invention pour déterminer automatiquement le point d'éclair d'un produit.

Selon ce premier mode de réalisation l'appareil de l'invention comporte :
- un vase 1 d'essai contenant le produit 2, comprenant un creuset la et son couvercle 1b dans le cas d'un vase clos et seulement le creuset la dans le cas d'un vase ouvert,
- des moyens 4 et 22 de production d'une flamme 5,
- un thermomètre 6 à lecture directe, pour la mesure de la température du produit 2,
- un détecteur 7 de variations d'intensité lumineuse comportant un voyant indicateur de la variation du rayonnement lumineux sur son entrée.

Le détecteur 7 de variations d'intensité lumineuse est placé de manière à ce qu'il reçoive une partie du rayonnement lumineux émis par la flamme 5 dans le cas d'une détermination du point d'éclair en vase clos. La disparition de la flamme 5 crée un variation d'intensité lumineuse à l'entrée du détecteur 7 de variations d'intensité lumineuse ce qui provoque l'allumage du voyant indicateur.

Le produit 2 chauffé progressivement par les moyens 3 de chauffage s'évapore. Quand les vapeurs ainsi produites s'enflamment, la flamme 5 est soufflée. Le détecteur 7 de variations d'intensité lumineuse ne recevant plus de rayonnement lumineux son voyant indicateur s'éclaire. A cet instant la température indiquée par le thermomètre 6 est représentative du point d'éclair.

Dans le cas d'une détermination du point éclair en vase ouvert le détecteur 7 de variations d'intensité lumineuse est placé de manière à ce qu'il reçoive le rayonnement lumineux émis par les vapeurs au dessus du liquide 2. A l'instant auquel les vapeurs s'enflamment un éclair lumineux se produit à la surface du liquide 2 qui entraîne une variation du rayonnement lumineux reçu par le détecteur 7 de variations d'intensité lumineuse qui elle même provoque l'allumage du voyant indicateur. A cet instant la température indiquée par le thermomètre 6 est représentative du point d'éclair.

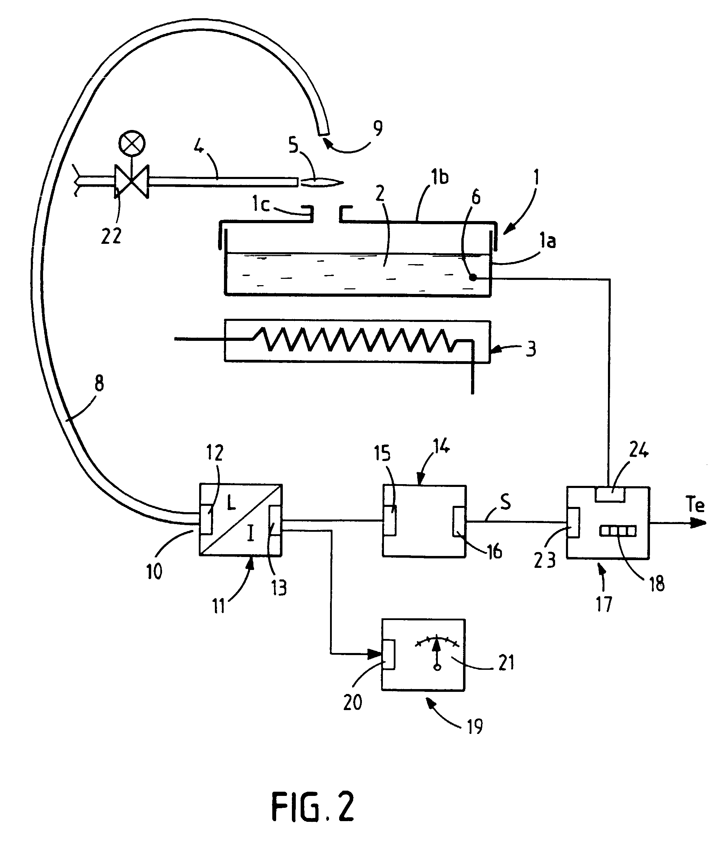

La figure 2 représente schématiquement un mode particulier de réalisation de l'appareil de l'invention pour la détection du point d'éclair en vase clos selon lequel cet appareil comporte :
- un vase 1 d'essai contenant le produit 2, comprenant un creuset 1a et son couvercle 1b muni d'une ouverture 1c,
- des moyens 3 de chauffage électrique du produit 2,
- des moyens 4 et 22 de production d'une flamme 5,
- un élément 6 de mesure de la température T du produit 2,
- une fibre 8 optique,
- un convertisseur 11 de lumière en signal électrique,
- un module 14 de détection de disparition de la flamme 5,
- un dispositif 17 électronique,
- un indicateur 19 de la taille de la flamme 5.

Les moyens 3 de chauffage du produit 2 comprennent une résistance chauffante et des moyens de commande et d'alimentation électrique non représentés sur la figure 2. Les moyens de commande assurent une montée en température du produit 2 réglable, par exemple 2 à 3 degrés par minute. La flamme 5 est produite à l'extrémité d'un tube 4 de diamètre intérieur de 0,8 mm, dans lequel circule un gaz combustible dont le débit est réglé par action sur le robinet 22 à pointeau de manière à obtenir une flamme 5 d'une longueur d'environ 4 mm.

La flamme 5 placée juste au dessus de l'ouverture 1c du couvercle 1b éclaire la première extrémité 9 plate de la fibre 8 optique dont la deuxième extrémité 10 est raccordée à l'entrée 12 optique du convertisseur 11 de lumière en signal électrique.

Ainsi une partie du rayonnement lumineux émis par la flamme 5 est captée par la face plate de la première extrémité 9 de la fibre 8 optique, puis transmise par ladite fibre 8 optique au travers de sa deuxième extrémité 10, à l'entrée 12 optique du convertisseur 11 et convertie en un signal électrique qui apparaît sur la sortie 13 dudit convertisseur 11. L'amplitude de ce signal électrique est représentative de l'éclairement par la flamme 5, de la face plate de la première extrémité 9 de la fibre 8 optique.

La sortie 13 du convertisseur 11 est reliée à l'entrée 15 du module 14 de détection de disparition de la flamme 5, qui comporte un circuit à seuil. La sortie 16 du module 14 de détection de disparition de la flamme délivre un signal binaire dont un des états est représentatif de l'absence de flamme 5. La sortie 16 du module 14 de détection de disparition de la flamme 5 est reliée à l'entrée 23 du dispositif 17 électronique.

L'élément 6 de mesure de la température T du produit 2 est relié à l'entrée 24 du dispositif 17 électronique qui reçoit ainsi un signal électrique représentatif de la température T. Lorsque le signal représentatif de l'absence de flamme 5 apparaît sur l'entrée 23, le dispositif 17 enregistre la valeur de la température T et l'affiche sur un indicateur numérique 18.

Sous l'effet de l'augmentation de sa température T le produit 2 s'évapore. Les vapeurs ainsi formées s'enflamment lorsque la température T du produit atteint la valeur du point d'éclair. Sous l'effet du souffle qui résulte de cette inflammation, la flamme 5 disparaît. La variation d'éclairement de la première extrémité 9 de la fibre 8 optique qui en résulte, déclenche selon processus décrit ci-dessus, l'enregistrement de la température T qui est représentative du point d'éclair du produit et son affichage sur l'indicateur 18.

Selon une autre caractéristique de l'appareil de l'invention la sortie 13 analogique du convertisseur 11 de lumière est reliée à l'entrée 20 de l'indicateur 19 dont l'indication est proportionnelle à l'amplitude du signal émis par la sortie 13 du convertisseur 11, lui même représentatif du rayonnement émis par la flamme 5 et donc de la taille de celle-ci.

Grâce à cet indicateur il est possible de régler et de contrôler de manière précise la taille de la flamme 5 en agissant sur le robinet à pointeau 22.

Pour rendre l'appareil de l'invention insensible aux rayonnements lumineux ambiants et aux perturbations ambiantes telles que les courants d'air, on enferme le vase 1 d'essai, une partie du tube 4 et une partie de la fibre 8 optique du côté de son extrémité 9, dans une enceinte opaque.

Grâce à l'indicateur 19 le réglage de la taille de la flamme 5 est toujours possible, alors qu'elle est cachée par l'enceinte opaque.

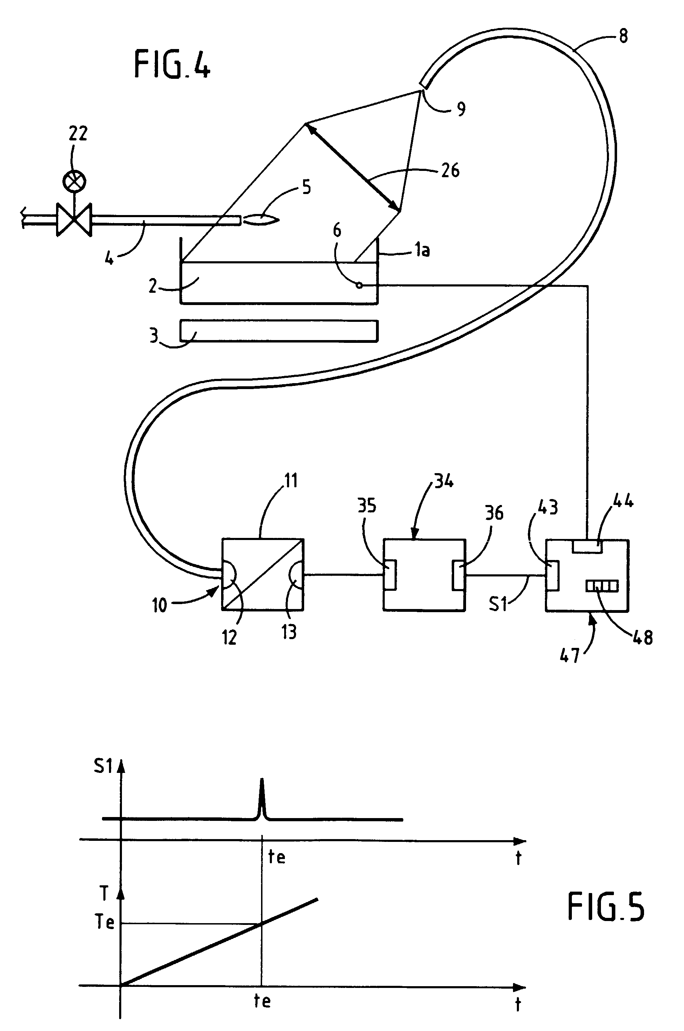

La figure 3 représente la variation dans le temps du signal S électrique appliqué à l'entrée 23 du dispositif 17 électronique et de la valeur de la température T du produit.

La variation brusque du signal S détermine l'instant te auquel la flamme 5 s'éteint au cours de la montée en température du produit sensiblement linéaire. La valeur du point d'éclair est égale à la température Te mesurée à l'instant te.

La figure 4 représente schématiquement un mode de réalisation de l'appareil de l'invention pour la détection du point d'éclair en vase ouvert selon lequel il comporte :
- un vase 1 d'essai contenant le produit 2, constitué par le creuset 1a,
- des moyens 3 de chauffage électrique du produit 2,
- des moyens 4 et 22 de production d'une flamme 5
- un élément 6 de mesure de la température T du produit 2,
- une lentille 26 optique convergente,
- une fibre 8 optique,
- un convertisseur 11 de lumière en signal électrique,
- un module 34 de détection d'éclair lumineux,
- un dispositif 47 électronique,

Les moyens 3 de chauffage du produit 2 comprennent une résistance chauffante et des moyens de commande et d'alimentation électrique non représentés sur la figure 2. Les moyens de commande assurent une montée en température du produit 2 réglable, par exemple 2 à 3 degrés par minute. La flamme 5 est produite à l'extrémité d'un tube 4 de diamètre intérieur de 0,8 mm, dans lequel circule un gaz combustible dont le débit est réglé par action sur le robinet 22 à pointeau de manière à obtenir une flamme 5 de 4 mm de longueur.

La flamme 5 est positionnée juste au dessus de la surface du liquide 2.

La lentille 26 est placée au dessus du liquide 2 son axe de symétrie faisant un angle, par exemple de 45 degrés, par rapport à la surface du liquide pour réduire les possibilités de dépôts de poussières sur ses faces.

La première extrémité 9 plate de la fibre 8 optique est placée sensiblement au foyer optique de la lentille 26, la deuxième extrémité 10 de la fibre optique est raccordée à l'entrée 12 optique du convertisseur 11 de lumière en signal électrique.

Ainsi une partie du rayonnement lumineux émis par les vapeurs au dessus de la surface du liquide 2 est captée par la face plate de la première extrémité 9 de la fibre 8 optique, puis transmise par ladite fibre 8 optique au travers de sa deuxième extrémité 10, à l'entrée 12 optique du convertisseur 11 et convertie en un signal électrique qui apparaît sur la sortie 13 dudit convertisseur 11. L'amplitude de ce signal électrique est représentative de l'éclairement de la face plate de la première extrémité 9 de la fibre 8 optique, par la flamme 5 et la surface du liquide 2.

La sortie 13 du convertisseur 11 est reliée à l'entrée 35 du module 34 de détection d'éclair lumineux, qui comporte un circuit de détection de pic de tension. La sortie 36 du module 34 de détection d'éclair lumineux délivre un signal binaire dont un des états est représentatif de l'apparition d'un pic de lumière sur la face plate de la première extrémité 9 de la fibre 8 optique. La sortie 36 du module 34 de détection d'éclair lumineux est reliée à l'entrée 43 du dispositif 47 électronique.

L'élément 6 de mesure de la température T du produit 2 est relié à l'entrée 44 du dispositif 47 électronique qui reçoit ainsi un signal électrique représentatif de la température T. Lorsque les vapeurs émises par le produit 2 chauffé s'enflamment, il se produit un éclair lumineux à la surface dudit produit, qui éclaire la face plate de la première extrémité 9 de la fibre 8 optique. Cet éclair est transmis par la fibre 8 optique à l'entrée 12 du convertisseur 11 qui produit un signal électrique représentatif de l'intensité lumineuse de l'éclair sur sa sortie 13. Le module 34 reçoit ce signal sur son entrée 35 et génère sur sa sortie 36 un signal binaire qui est appliqué à l'entrée 43 du dispositif 47. Le dispositif 47 enregistre la valeur de la température Te du produit 2 à cet instant te et l'affiche sur un indicateur 48 numérique. Cette valeur Te est représentative de la valeur du point d'éclair en vase ouvert du produit 2.

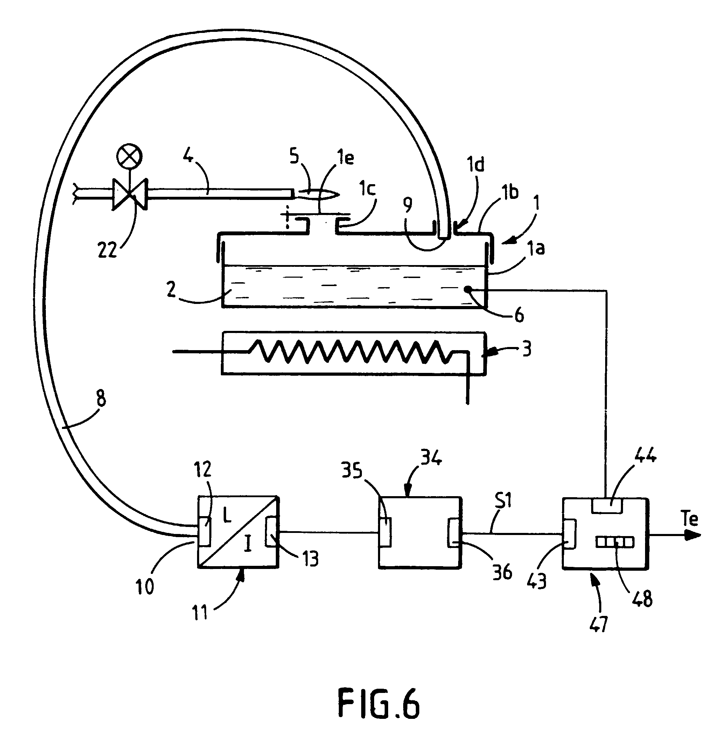

La figure 6 représente schématiquement un mode particulier de réalisation de l'appareil de l'invention pour la détection du point d'éclair en vase clos selon lequel cet appareil comporte :
- un vase 1 d'essai contenant le produit 2, comprenant un creuset 1a et son couvercle 1b muni de deux ouvertures 1c et 1d, et d'un volet le obturateur commandable,
- des moyens 3 de chauffage électrique du produit 2,
- des moyens 4 et 22 de production d'une flamme 5,
- un élément 6 de mesure de la température T du produit 2,
- une fibre 8 optique,
- un convertisseur 11 de lumière en signal électrique,
- un module 34 de détection d'éclair lumineux,
- un dispositif 47 électronique,

Les moyens 3 de chauffage du produit 2 comprennent une résistance chauffante et des moyens de commande et d'alimentation électrique non représentés sur la figure 2. Les moyens de commande assurent une montée en température du produit 2 réglable, par exemple 2 à 3 degrés par minute. La flamme 5 est produite à l'extrémité d'un tube 4 de diamètre intérieur de 0,8 mm, dans lequel circule un gaz combustible dont le débit est réglé par action sur le robinet 22 à pointeau de manière à obtenir une flamme 5 d'une longueur d'environ 4 mm.

La flamme 5 est placée juste au dessus du volet 1e obturateur de l'ouverture 1c du couvercle 1b. La première extrémité 9 de la fibre optique est placée à l'intérieur du vase 1 au dessus du produit 2, la fibre 8 optique pénétrant dans le vase 1 au travers de l'ouverture 1d du couvercle 1b.

Ainsi la face plate de la première extrémité 9 de la fibre 8 optique capte une partie du rayonnement lumineux émis par les vapeurs émises par le produit 2 chauffé, et la transmet par ladite fibre 8 optique au travers de sa deuxième extrémité 10, à l'entrée 12 optique du convertisseur 11. Ce convertisseur 11 transforme le rayonnement lumineux reçu sur son entrée 12 en un signal électrique qui apparaît sur sa sortie 13. L'amplitude de ce signal électrique est représentative de l'éclairement, de la face plate de la première extrémité 9 de la fibre 8 optique.

La sortie 13 du convertisseur 11 est reliée à l'entrée 35 du module 34 de détection d'éclair lumineux, qui comporte un circuit de détection de pic de signal électrique. La sortie 36 du module 34 de détection d'éclair lumineux délivre un signal électrique binaire dont un des états est représentatif de l'apparition d'un pic de lumière sur la face plate de la première extrémité 9 de la fibre 8 optique. La sortie 36 du module 34 de détection d'éclair lumineux est reliée à l'entrée 43 du dispositif 47 électronique.

L'élément 6 de mesure de la température T du produit 2 est relié à l'entrée 44 du dispositif 47 électronique qui reçoit ainsi un signal électrique représentatif de la température T.

A intervalles réguliers de température du produit 2, le volet le obturateur est déplacé de manière à dégager l'ouverture 1c par laquelle la flamme 5 est dirigée dans le vase 1. Après présentation de la flamme 5 au dessus du liquide 2, elle est retirée et le volet obturateur refermé.

Lorsque les vapeurs émises par le produit 2 chauffé s'enflamment, il se produit un éclair lumineux à la surface dudit produit, qui éclaire la face plate de la première extrémité 9 de la fibre 8 optique. Cet éclair est transmis par la fibre 8 optique à l'entrée 12 du convertisseur 11 qui produit un signal électrique représentatif de l'intensité lumineuse de l'éclair sur sa sortie 13. Le module 34 reçoit ce signal sur son entrée 35 et génère sur sa sortie 36 un signal binaire qui est appliqué à l'entrée 43 du dispositif 47. Le dispositif 47 enregistre la valeur de la température Te du produit à cet instant te et l'affiche sur un indicateur numérique 48. Cette valeur Te est représentative de la valeur du point d'éclair en vase ouvert du produit 2.

La figure 5 représente la variation dans le temps du signal S1 électrique appliqué à l'entrée 43 du dispositif 47 électronique et de la valeur de la température T du produit. Le pic de variation du signal S1 détermine l'instant te auquel les vapeurs du liquide 2 chauffé s'enflamment. La valeur du point d'éclair est égale à la température Te mesurée à l'instant te.

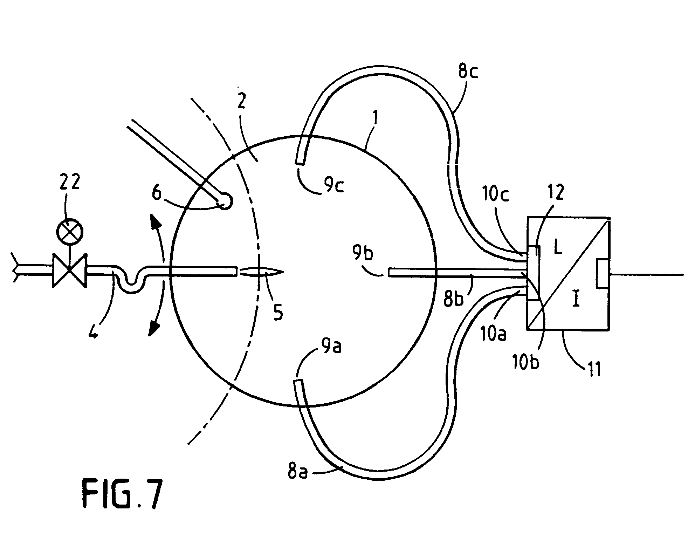

Une variante du troisième mode de réalisation est représentée figure 7, selon laquelle l'appareil de l'invention comporte un tube 4 de production de la flamme 5 mobile qui se déplace à la surface du liquide 2 et trois fibres 8a, 8b et 8c optiques. Ces trois fibres captent une partie du rayonnement lumineux émis par l'éclair qui résulte de l'inflammation des vapeurs du produit 2, sur leurs premières extrémités 9a, 9b et 9c. Les deuxièmes extrémités 10a, 10b et 10c des fibres 8a,8b et 8c sont reliées à l'entrée 12 du convertisseur 11 de lumière en signal électrique.

Les modes de réalisation décrits ci-dessus sont donnés à titre d'exemples non limitatifs, les moyens de l'invention seront facilement adaptables à d'autres types d'appareils de détermination du point d'éclair à vase ouvert ou à vase clos.

## Revendications

1. Appareil pour la détermination du point d'éclair d'un produit, comprenant un vase (1) d'essai destiné à contenir le produit (2), des moyens (3) de chauffage du produit (2), des moyens (4 et 22) de production d'une flamme (5) calibrée, un élément (6) de mesure de la température du produit (2), caractérisé en ce qu'il comporte de plus, des moyens (7) optiques de détection de variations d'intensité lumineuse.

2. Appareil selon la revendication 1, caractérisé en ce que le vase (1) d'essai étant de type clos muni d'un couvercle comportant une ouverture pour la présentation de la flamme (5), les moyens optiques de détection de variations d'intensité lumineuse comportent au moins une fibre (8) optique ayant une première extrémité (9) et une seconde extrémité (10), la première extrémité (9) étant placée à l'extérieur du vase (1) d'essai de manière à capter une partie du rayonnement lumineux émis par la flamme (5), ladite partie du rayonnement lumineux se propageant à l'intérieur de la fibre (8) optique jusqu'à la seconde extrémité (10).

3. Appareil selon la revendication 2, caractérisé en ce qu'il comporte :
- un convertisseur (11) de lumière en signal électrique ayant une entrée (12) optique à laquelle est raccordée la seconde extrémité (10) de la fibre (8) optique et une sortie (13) analogique électrique.
- un module (14) de détection de disparition de la flamme (5), muni d'une entrée (15) analogique reliée à la sortie analogique (13) du convertisseur (11) de lumière et d'une sortie (16) logique qui délivre un signal électrique indicatif de la disparition de la flamme (5).
- un dispositif (17) électronique raccordé à la sortie (16) logique du module (14) de détection de disparition de la flamme et à l'élément (6) de mesure de la température, ledit dispositif enregistrant la valeur de la température du produit (2) à l'instant d'apparition du signal électrique indicatif de la disparition de la flamme (5).

4. Appareil selon la revendication 2 ou 3, caractérisé en ce que le vase (1) d'essai, les moyens (4 et 22) de production d'une flamme (5) calibrée et la première extrémité (9) de la fibre (8) optique sont placés à l'intérieur d'une enceinte opaque qui les protège de la lumière ambiante.

5. Appareil selon la revendication 3 ou 4, caractérisé en ce qu'il comporte un indicateur (19) de la taille de la flamme (5), muni d'une entrée (20) raccordée à la sortie (13) analogique électrique du convertisseur (11) de lumière.

6. Appareil selon la revendication 1, caractérisé en ce que le vase d'essai étant de type ouvert et le produit (2) émettant des vapeurs, les moyens optiques de détection de variations d'intensité lumineuse comportent une lentille (26) convergente placée au dessus de la surface du produit (2), au moins une fibre (8) optique ayant une première extrémité (9) et une seconde extrémité (10), la première extrémité (9) étant placée au foyer optique de la lentille (26) convergente de manière à capter une partie du rayonnement lumineux émis par les vapeurs du produit (2) enflammées par la flamme (5), ladite partie du rayonnement lumineux se propageant à l'intérieur de la fibre (8) optique jusqu'à la seconde extrémité (10).

7. Appareil selon la revendication 1, caractérisé en ce que le vase (1) d'essai étant de type clos muni d'un couvercle (1c) comportant une première ouverture (1b) pour la présentation de la flamme (5) et le produit (2) émettant des vapeurs, les moyens optiques de détection de variations d'intensité lumineuse comportent au moins une fibre (8) optique ayant une première extrémité (9) et une seconde extrémité (10), la première extrémité (9) pénétrant au travers d'une deuxième ouverture (ld) aménagée dans le couvercle est placée à l'intérieur du vase (1) d'essai de manière à capter une partie du rayonnement lumineux émis par les vapeurs du produit (2) enflammées par la flamme (5), ladite partie du rayonnement lumineux se propageant à l'intérieur de la fibre (8) optique jusqu'à la seconde extrémité (10).

8. Appareil selon la revendication 6 ou 7, caractérisé en ce qu'il comporte :
- un convertisseur (11) de lumière en signal électrique ayant une entrée (12) optique à laquelle est raccordée la seconde extrémité (10) de la fibre (8) optique et une sortie (13) analogique électrique,
- un module (34) de détection d'éclair lumineux, muni d'une entrée (35) analogique reliée à la sortie analogique (13) du convertisseur (11) de lumière et d'une sortie (36) logique qui délivre un signal électrique indicatif de l'allumage des vapeurs de produit (2),
- un dispositif (47) électronique raccordé à la sortie (36) logique du module (34) de détection d'éclair lumineux et à l'élément (6) de mesure de la température, ledit dispositif enregistrant la valeur de la température du produit (2) à l'instant d'allumage des vapeurs du produit (2) par la flamme (5).
